Europäisches Patentamt

European Patent Office

Office européen des brevets

(11) Veröffentlichungsnummer: **0 340 712**
**A1**

(12) # EUROPÄISCHE PATENTANMELDUNG

(21) Anmeldenummer: 89107900.6

(22) Anmeldetag: 02.05.89

(51) Int. Cl.⁴: **A47J 31/30 , A47J 31/057**

(30) Priorität: 05.05.88 DE 3815355

(43) Veröffentlichungstag der Anmeldung:
**08.11.89 Patentblatt 89/45**

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Fühner, Hubert, Dipl.-Ing.**
**Zwergstrasse 6**
**D-5650 Solingen 19(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Elektrisch betriebenes Gerät zum Zubereiten heisser Getränke, wie Kaffee, Tee od. dgl.**

(57) Es handelt sich um ein elektrisch betriebenes Gerät zum Zubereiten heißer Getränke, wie Kaffee, Tee od.dgl. Das Gerät hat ein Gehäuse zur Unterbringung von Schalt-, Steuer- und Heizeinrichtungen, ferner einen Frischwasserbehälter (12). Eine Fördereinrichtung dient zum Weiterleiten des erhitzten Wassers zu einem das zu überbrühende Gut, wie Kaffeemehl od.dgl. aufnehmenden Filter. Unterhalb des Filters ist ein Auffangbehälter (34) für das fertige Getränk vorgesehen. Der Frischwasserbehälter (12) ist aus einem geschmacksneutralen Werkstoff gefertigt und in wenigstens zwei Kammern (13,14) unterteilt. Diese bilden ein kommunizierendes System. Die eine der beiden Kammern des Frischwasserbehälters steht mit der Atmosphäre in Verbindung, die andere Kammer ist dagegen als Dampfdruckkammer ausgebildet. In die Dampfdruckkammer (14) tauchen die jeweils eine Eintrittsöffnung aufweisenden einen Enden mehrerer Saugheber (16,43) ein. Die die Durchtrittsmenge des erhitzten Wassers bestimmenden Querschnitte der durchgehenden Bohrungen der Saugheber sind unter schiedlich dimensioniert. Die Austrittsöffnungen (17,45) der anderen Enden der Saugheber liegen unterhalb des Bodens der Dampfdruckkammer und über dem Filter für das Kaffeemehl. Wenigstens einem der über dem Filter liegen-den Enden des Saughebers ist ein Thermoschalter (21) zugeordnet, der die Leistung der Heizeinrichtung des Gerätes steuert.

FIG.2

## Elektrisch betriebenes Gerät zum Zubereiten heißer Getränke, wie Kaffee, Tee od.dgl.

Die Erfindung bezieht sich auf ein elektrisch betriebenes Gerät zum Zubereiten heißer Getränke, wie Kaffee, Tee od.dgl., mit einem Gehäuse zur Unterbringung von Schalt-, Steuer- und Heizeinrichtungen, einem Frischwasserbehälter, Fördereinrichtungen zum Weiterleiten des erhitzten Wassers zu einem das zu überbrühende Gut, wie Kaffeemehl od.dgl. aufnehmenden Filter und einem vorzugsweise eine Warmhalteeinrichtung aufweisenden Auffangbehälter für das aus dem Filter auslaufende fertige Getränk, wie Kaffee od.dgl.

Derartige, auch als Kaffee- oder Teeautomaten bezeichnete, elektrisch betriebene Geräte sind in zahlreichen Ausführungsformen bekannt. Sie arbeiten in aller Regel zufriedenstellend und erleichtern dem Benutzer das Zubereiten von Kaffee od.dgl., da sie nach ihrem Beschicken eine automatische Herstellung des Kaffees od.dgl. bewerkstelligen.

Auf der anderen Seite wurde bei durchgeführten Tests mit derartigen Kaffeeautomaten kein getestetes Gerät mit der Bewertung "sehr gut" ausgezeichnet. Zur Begründung eines solchen Bewertungsurteils wird oft angeführt, das Aroma des mit einem Kaffeeautomaten hergestellten Kaffees sei nicht zu vergleichen mit einem von Hand aus aufgebrühten Kaffee. Bei der letztgenannten Kaffee-Erzeugung werden die einzelnen Verfahrensschritte praktisch von Hand ausgeführt. Dieser sogenannte Handaufguß von Kaffee od.dgl. unterscheidet sich von der automatischen Zubereitung von Kaffee in folgenden wesentlichen Punkten:

Bei dem Handaufguß von Kaffee kann man wirklich kochendes Wasser auf das im Filter befindliche Kaffeemehl gießen. Dagegen werden in den Kaffeeautomaten in aller Regel Brühtemperaturen erreicht, die hinsichtlich ihres unteren Wertes bei etwa 85° C und hinsichtlich ihres oberen Wertes bei etwa 95° C liegen. Diese Werte liegen somit erheblich unterhalb der Koch- oder Siedetemperatur von Wasser.

Ein weiterer Mangel der bisher bekannten Ausführungsformen von Kaffeeautomaten ist der, daß das erste vom Kaffeeautomaten dem Kaffeemehl zugeführte Wasser verhältnismäßig kalt ist. Dies gilt z.B. dann, wenn das Erhitzen des Wassers mit einem elektrisch betriebenen Durchlauferhitzer erfolgt. Hier sind besondere Vorkehrungen zu treffen, um die Zufuhr von kaltem Wasser in der Anfangsphase der Kaffeeherstellung zu vermeiden. Trotz dieser zusätzlichen Aufwendungen wird die Siedetemperatur des Wassers nicht erreicht. Demgegenüber ist beim Handaufguß schon der erste Wasserschwall kochend heiß.

Beim Handaufguß wird in aller Regel mit solchen Gefäßen gearbeitet, die aus geschmacksneutralen Werkstoffen gefertigt sind, z.B. aus Porzellan, Steingut, Keramik od.dgl. Behälter aus einem Metall, wie Aluminium, Kupfer od.dgl. werden dagegen kaum eingesetzt. Dies hat zwangsläufig zur Folge, daß es beim Handaufguß in aller Regel nicht zu einer Geschmacksbe einträchtigung des Kaffees durch den Werkstoff des benutzten Gefäßes kommen kann. Eine Geschmacksbeeinträchtigung findet z.B. immer dann statt, wenn das Wasser oder der fertige Kaffee mit einem Metall, insbesondere mit Aluminium, in Wirkverbindung kommt. Derartige metallische Werkstoffe werden häufig bei der Kaffeeautomatenherstellung eingesetzt. Erwähnt seien Durchlauferhitzer und deren Teile. Diese Werkstoffe, z.B. das Wasserführungsrohr aus Aluminium bei einem Durchlauferhitzer, beeinträchtigen den Geschmack des hergestellten Kaffees.

Und schließlich ist der Filtervorgang beim Handaufbrühen zwar kürzer als bei der Automatenherstellung, aber durch kräftiges Einschütten intensiver. Bitterstoffe werden bei dieser Handhabung, also beim Handaufguß des Kaffees, praktisch nicht gelöst.

Der vorliegenden Erfindung liegt die Aufgabe zugrunde, elektrisch betriebene Geräte zum Zubereiten heißer Getränke, wie Kaffee, Tee od.dgl. der eingangs näher gekennzeichneten Art so zu gestalten, daß die angeführten Mängel bekannter Ausführungsformen von Kaffeeautomaten od.dgl. beseitigt werden und diese Kaffeeautomaten bei wirtschaftlicher Herstellung so zu gestalten, daß die genannten Parameter des Handaufgusses von Kaffee weitgehend erreicht werden. Es sollen somit die Vorteile des Handaufgusses von Kaffee mit denen der automatischen Kaffeezubereitung vereint werden.

Zur Lösung dieser Aufgabe erhält das elektrisch betriebene Gerät zum Zubereiten heißer Getränke, wie Kaffee, Tee od.dgl. oder kurz der Kaffeeautomat folgende Merkmale:

Der aus einem geschmacksneutralen Werkstoff gefertigte Frischwasserbehälter ist in wenigstens zwei Kammern unterteilt, die nach Art kommunizierender Gefäße miteinander in Verbindung stehen;

die eine der beiden Kammern steht mit der Atmosphäre in Verbindung;

die zweite Kammer ist als Dampfdruckkammer ausgebildet;

in die Dampfdruckkammer tauchen die jeweils eine Eintrittsöffnung aufweisenden einen Enden mehrerer Saugheber ein;

die die Durchtrittsmenge des erhitzten Wassers bestimmenden Querschnitte der durchgehenden Bohrungen der Saugheber sind unterschiedlich dimensioniert;

die Austrittsöffnungen der anderen Enden der Saugheber liegen unterhalb des Bodens der Dampfdruckkammer und über dem Filter für das Kaffeemehl;
an wenigstens einem der über dem Filter liegenden Enden der Saugheber ist ein Thermoschalter angebracht, der die Leistung der Heizeinrichtung des Gerätes steuert.

Durch die erfindungsgemäße Ausbildung eines Kaffeeautomaten ergeben sich im Vergleich mit den bekannten Ausführungsformen erhebliche Vorteile. Durch die Verwendung von geschmacksneutralen Werkstoffen bei der Herstellung des Frischwasserbehälters entfällt jede Geschmacksbeeinträchtigung des herzustellenden Kaffees. Für die Herstellung des Frischwasserbehälters können alle in der einschlägigen Technik üblichen geschmacksneutralen Stoffe eingesetzt werden. Neben Glas, Porzellan, Steingut kommen auch geschmacksneutrale Kunststoffe in Betracht. Aber nicht nur der Frischwasserbehälter sondern alle Teile des erfindungsgemäßen Kaffeeautomaten, die mit dem Wasser oder mit dem fertigen Kaffee in Verbindung kommen, werden aus geschmacksneutralen Werkstoffen gefertigt. Dies gilt auch für den Saugheber, den Filter und das Auffanggefäß für den fertigen Kaffee.

Beim bestimmungsgemäßen Gebrauch des erfindungsgemäßen Kaffeeautomaten kann die gesamte Wassermenge in die eine der beiden Kammern, nämlich in diejenige, welche mit der Atmosphäre in Verbindung steht, eingegossen werden. Dies geschieht entweder durch einen abnehmbaren Deckel oder durch eine Öffnung in der oberen Abdeckung dieser Kammer. Da die beiden Kammern des Frischwasserbehälters nach Art kommunizierender Röhren ausgebildet sind, steigt das Wasser in der Dampfdruckkammer ebenso hoch wie in der anderen Kammer, in welche das Eingießen des Frischwassers erfolgt.

Die gesamte in den Frischwasserbehälter eingefüllte Kaffeemenge wird beim bestimmungsgemäßen Gebrauch des Kaffeeautomaten zum Kochen gebracht. Danach erfolgt das Überführen des kochenden Wassers zum Kaffeemehl.

Die Dampfdruckkammer wird in vorteilhafter Weise von den Begrenzungswandungen des Frischwasserbehälters bzw. von einer zwischen den Kammern liegenden Scheide- oder Trennwand begrenzt. Irgendwelche Dichtelemente brauchen zur Schaffung der Dampfdruckkammer in der Regel nicht eingesetzt zu werden, weil die Dampfdruckkammer mit ihren Wandungen einstückig gefertigt werden kann Der Übergangsbereich zwischen den beiden Kammern liegt in der Nähe des Bodens des Frischwasserbehälters Er besteht in einfacher Weise aus einem spaltartigen Durchlaß in der Trenn- oder Scheidewand. Dies bedeutet, daß die Trenn-oder Scheidewand nicht bis zum Boden des Frischwasserbehälters durchgezogen wird sondern vorher endet. Durch den so geschaffenen Spalt oder Durchlaß kann das Wasser aus der einen Kammer in die andere gelangen. Der Durchlaß steht beim Gebrauch des Kaffeeautomaten unter Wasser und benötigt somit auch keine besondere Abdichtung, zumal er räumlich entfernt von derjenigen Stelle der Dampfdruckkammer liegt, in der sich der Wasser dampf ansammelt.

Zum Kochen des Wassers kann eine grundsätzlich bekannte Heizeinrichtung benutzt werden. Durch diese elektrisch betriebene Heizeinrichtung wird in der Dampfdruckkammer durch sich bildenden Wasserdampf ein Überdruck erzeugt, der zum Weiterleiten des kochenden Wassers zum im Filter befindlichen Kaffeemehl ausgenutzt wird. Dabei wird das grundsätzlich seit langem bekannte Prinzip des Saughebers eingesetzt. Mittels des Saughebers drückt der Dampfdruck das kochende Wasser in seine Eintrittsöffnung, die sich am tiefsten Punkt des Bodens der Dampfdruckkammer befindet. Die Austrittsöffnung des anderen Endes jedes Saughebers liegt unterhalb dieses Bodens der Dampfdruckkammer und sogleich über dem Filter für das Kaffeemehl. Wenn bei einer solchen Ausbildung der Saugheber begonnen hat, Wasser zu fördern, dann wird er dies so lange tun, bis der gesamte Inhalt des Frischwasserbehälters und damit das kochende Wasser über das Kaffeemehl in den Filter geleitet ist. Das Überführen des kochenden Wassers mittels des Saughebers erfolgt somit kontinuierlich und nicht schwallweise.

Grundsätzlich ist es bekannt, bei einer Kaffee- oder Teemaschine das Saugheberprinzip einzusetzen. So ist in der DE-GM 8 708 082 eine Kaffee- oder Teemaschine mit einem Durchlauferhitzer für das Brühwasser offenbart, die ein Filtergefäß sowie eine mittels eines Saughebers entleerbaren Sammelbehälter hat, von dem aus das Brühwasser in das Filtergefäß eingeleitet wird. Bei dieser bekannten Ausführungsform einer Kaffee- oder Teemaschine wird somit ein Durchlauferhitzer zum Erwärmen und Weiterleiten des Wassers herangezogen. Dieses aus dem Durchlauf stammende heiße Wasser wird jedoch nicht dem im Filter befindlichen Kaffeemehl direkt zugeführt sondern es wird in einen zusätzlichen Sammelbehälter geleitet. Dieser Sammelbehälter ist mit einem Saugheber ausgestattet. Das Auslaufrohr des Saughebers durchtritt dabei eine an der tiefsten Stelle des Sammelbehälters angeordnete Öffnung, deren Durchmesser größer ist als der Außendurchmesser des Auslaufrohres. Ferner ist das Auslaufrohr außenseitig mit einer die Öffnung des Sammelbehälters verschließenden Dichtung versehen und zum Zwecke der Freigabe dieser Öffnung axial bewegbar gelagert. Im Gegensatz zu dieser bekannten Ausführungsform einer Kaffee- oder Teemaschine wird bei dem erfindungsgemäßen Kaffeeautomat weder mit einem elektrisch betriebenen Durchlauferhitzer gearbeitet, noch ist die Verwendung eines besonderen Zusatzbehälters erforderlich, in dem der Saugheber angeordnet ist. Stattdessen wird über die Saugheber das erhitzte Wasser direkt dem Kaffeemehl zugeleitet, das sich unter Zwischenschaltung einer Filtertüte od.dgl. im Filter befindet.

Zum Überführen des kochenden Wassers aus der Dampfdruckkammer in den Filter werden mehrere, mindestens zwei Saugheber mit unterschiedlichem Rohrdurchmesser benutzt. Diese Saugheber arbeiten eine Zeit lang gemeinsam. Danach hört der eine Saugheber mit seiner Förderung auf, weil er nicht mehr in das Wasser hineinragt. Der andere Saugheber, meist der mit dem kleineren Rohrdurchmesser, arbeitet dann alleine weiter und zwar so lange, bis das gesamte kochende Wasser aus der Dampfdruckkammer bzw. dem Frischwasserbehälter entfernt ist. Nach einem weiteren Vorschlag der Erfindung wird mindestens an dem einen Saugheber, und zwar an seinem über dem Filter liegenden Ende, ein grundsätzlich bekannter Thermoschalter angebracht.

Dieser steuert die Leistung der Heizeinrichtung des Kaffeeautomaten. Eine solche Steuerung der Heizeinrichtung durch den Thermoschalter bringt erhebliche Vorteile mit sich. Dabei wird der Tatsache Rechnung getragen, daß mit dem Inbetriebsetzen des Saughebers die Wassermenge in der Dampfdruckkammer stetig abnimmt. Bei gleichbleibender Heizleistung würde es daher zu einer sehr starken Dampfbildung, vor allem aber zu einem sehr intensiven Sprudeln und Hochspritzen des immer weniger werdenden Wassers kommen. Diesem Verhalten kann man entgegenwirken, wenn man erfindungsgemäß mindestens dem einen über dem Filter liegenden Ende des einen Saughebers einen Thermoschalter zuordnet und diesen zur Steuerung der Leistung der Heizeinrichtung des Kaffeeautomaten einsetzt. Durch den Thermoschalter wird schon nach kürzester Zeit sein Thermostat wirksam und fährt die Heizleitung zurück. Dabei wird der Tatsache Rechnung getragen, daß beim Durchströmen des kochenden Wassers durch die durchlaufende Bohrung des Saughebers auch dessen Begrenzungswand erwärmt wird. Diese nicht unbeträchtliche Wärme wird dazu ausgenutzt, um den Bimetallstreifen oder die Bimetallscheibe des Thermoschalters aus ihrer Ruhelage in die wirksame Lage zu überführen. Auf diese Weise läßt sich mit einfachen Mitteln ein ungewollt starkes Sprudeln des noch in der Dampfdruckkammer befindlichen Restwassers vermeiden. Es ist dabei ohne weiteres auch möglich, mittels des Thermoschalters die Heizeinrichtung vollständig abzuschalten. Für das Überführen des kochenden Wassers zum Kaffeemehl durch den Saugheber ergeben sich dadurch keine Nachteile, denn wenn ein Saugheber einmal mit der Förderung des Wassers begonnen hat, wird diese so lange fortgesetzt, bis das Wasser vollständig aus dem Frischwasserbehälter herausgeführt ist.

Wie gesagt genügt es im einfachsten Falle, nur einem der vorhandenen Saugheber einen Thermoschalter der genannten Art zuzuordnen. Besser ist es aber, wenn jeder Saugheber einen eigenen Thermoschalter erhält. Diese Thermoschalter können dazu noch so beschaffen sein, daß die in ihrem Inneren befindlichen Bimetalle auf unterschiedliche Temperaturen ansprechen.

Es sei ferner erwähnt, daß es in aller Regel genügt, wenn man an einem Saugheber einen einzigen Thermoschalter anbringt. In Sonderfällen lassen sich auch ohne weiteres mehrere Thermoschalter ein und demselben Saugheber zuordnen, wobei diese Thermoschalter unterschiedliche Eigenschaften haben können.

Die Erfindung läßt sich auf unterschiedliche Art und Weise ausführen. Nach einem ersten Vorschlag der Erfindung sind die Eintrittsöffnungen der vorhandenen Saugheber unterschiedlich weit von dem Boden der Dampfdruckkammer entfernt, derart, daß die Eintrittsöffnung des Saughebers mit der im Querschnitt größeren Bohrung den größeren Abstand vom Boden aufweist. Wenn bei dieser Ausführungsform des Kaffeeautomaten genügend viel Wasser im Frischwasserbehälter ist, dann werden in der ersten Phase beide Saugheber gemeinsam arbeiten. Dies erfolgt so lange, bis die Wassermenge in der Dampfdruckkammer so weit abgesunken ist, daß die Eintrittsöffnung des Saughebers mit dem größeren Querschnitt frei wird. Ist der Wasserspiegel in der Dampfdruckkammer so weit abgesunken, dann hört die Förderung des Saughebers mit dem größeren Querschnitt auf. Der Wassertransport erfolgt dann nur noch durch den zweiten Saugheber mit dem geringeren Rohrdurchmesser. Eine solche Anordnung hat den Vorteil, daß zu Beginn des Brühvorganges wie beim Handaufguß sehr viel kochendes Wasser in den Filter gefördert wird.

Wird dagegen mit dem erfindungsgemäßen Kaffeeautomaten lediglich die Zubereitung von wenigem, beispielsweise zwei Tassen Kaffee gewünscht, dann wird das Eintrittsende des den größeren Durchmesser aufweisenden Saughebers überhaupt nicht in den Wasserspiegel eintauchen. Dies bedeutet, daß in diesem Falle nur das dünnere, längere Rohr als Saugheber zum Einsatz kommt. Daher ist auch der Zulauf zum Filter entsprechend langsamer.

Nach einem anderen Vorschlag der Erfindung erfolgt die Verwendung mehrerer Saugheber, deren Bohrungen unterschiedliche Querschnittsgröße aufweisen, deren Eintrittsöffnungen jedoch in gleicher Höhe im bezug auf den Boden der Dampfdruckkammer angeordnet sind. Diese Saugheber haben in ihrem Scheitel jeweils einen Durchbruch, der unter Verwendung eines Steuerelementes wahlweise in seine Offen- oder Schließlage überführbar ist. Sofern alle Durchbrüche der Saugheber geschlossen sind, können alle vorhandenen Saugheber gleichzeitig zur Förderung des kochenden Wassers aus der Dampfdruckkammer in den Filter herangezogen werden. Auf der anderen Seite hat es der Benutzer jedoch in der Hand, die im Scheitel der Saugheber liegenden Durchbrüche durch die Steuerelemente zu öffnen. Auf diese Weise ist eine Steuerung der Brühzeit und der Brühintensität möglich.

Es empfiehlt sich, im Scheitel jedes vorhandenen Saughebers mehrere Durchbrüche anzuordnen und dabei jedes zugeordnete Steuerelement als Sperrschieber auszubilden, der jeweils entlang der Scheitelaußenfläche in eine Offen- oder Schließlage verschiebbar ist. Bei einer solchen Ausbildung ist das Steuerelement an der erforderlichen Stelle vorhanden, und es kann vom Benutzer in die von ihm gewollte Lage überführt werden, so daß er die Brühzeit und die Brühintensität steuern kann, indem er die Steuerelemente der Saugheber in die günstigste Lage überführen kann.

Dabei empfiehlt es sich, die Sperrschieber in ihren Endlagen durch Rasten und Gegenrasten la-gezusichern.

Die Eintrittsöffnungen der Saugheber liegen zweckmäßig in einem vertieften Bereich des Bodens der Dampfdruckkammer. Dies ist für das vollständige Entfernen des Wassers aus der Dampf-druckkammer günstig. Zur vollständigen Entlee-rung des Wassers aus dem Frischwasserbehälter trägt auch bei, wenn man nach einem weiteren Vorschlag der Erfindung den Boden des Frischwasserbehälters in Richtung auf den vertieften Bereich geneigt anordnet. Dadurch läuft das Restwasser immer in diesen vertieften Bereich und kommt damit in Wirkverbindung mit den Eintrittsöffnungen der Saugheber, die sich dort befinden.

Auf den Zeichnungen ist die Erfindung in mehreren Ausführungsbeispielen dargestellt und zwar zeigen :

Fig. 1 eine erste Ausführungsform eines er-findungsgemäßen Kaffeeautomaten in schemati-scher Darstellung, teilweise im Schnitt und teilweise in Seitenansicht,

Fig. 2 ebenfalls in schematischer Darstellung eine zweite Ausführungsform des erfindungsgemäßen kaffeeautomaten, teilweise im Schnitt, teilweise in Seitenansicht und

Fig. 3 ebenfalls in schematischer Darstellung eine dritte Ausführungsform des erfindungsgemäßen Kaffeeautomaten, teilweise im Schnitt, teilweise in Seitenansicht.

Es sei zunächst erwähnt, daß in den Figuren der Zeichnungen nur diejenigen Teile eines erfindungsgemäßen Kaffeeautomaten dargestellt sind, welche für das Verständnis der Erfindung Bedeutung haben. So fehlen nähere Einzelheiten über die einzusetzenden Schalt-, Steuer- und Heizeinrichtungen. Diese Einrichtungen werden zweckmäßig in einem gemeinsamen Gehäuse untergebracht. Es fehlt auch das elektrische Kabel mit dem zugehörigen Stecker, der in bekannter Weise an eine Steckdose angeschlossen werden kann. Im übrigen können alle in den Zeichnungen fehlenden Teile nicht nur einen bekannten Aufbau haben sondern auch in ebenfalls bekannter Weise in dem Gehäuse des Kaffeeautomaten eingebaut sein. Zweckmäßig wird bei den Schalt-, Steuer- und Heizeinrichtungen auf im Handel befindliche Ausführungsformen zurückgegriffen. Dies gilt auch für die Thermoschalter, die in noch zu schildernder Weise mit den Saughebern des Kaffeeautomaten zusammenwirken sollen.

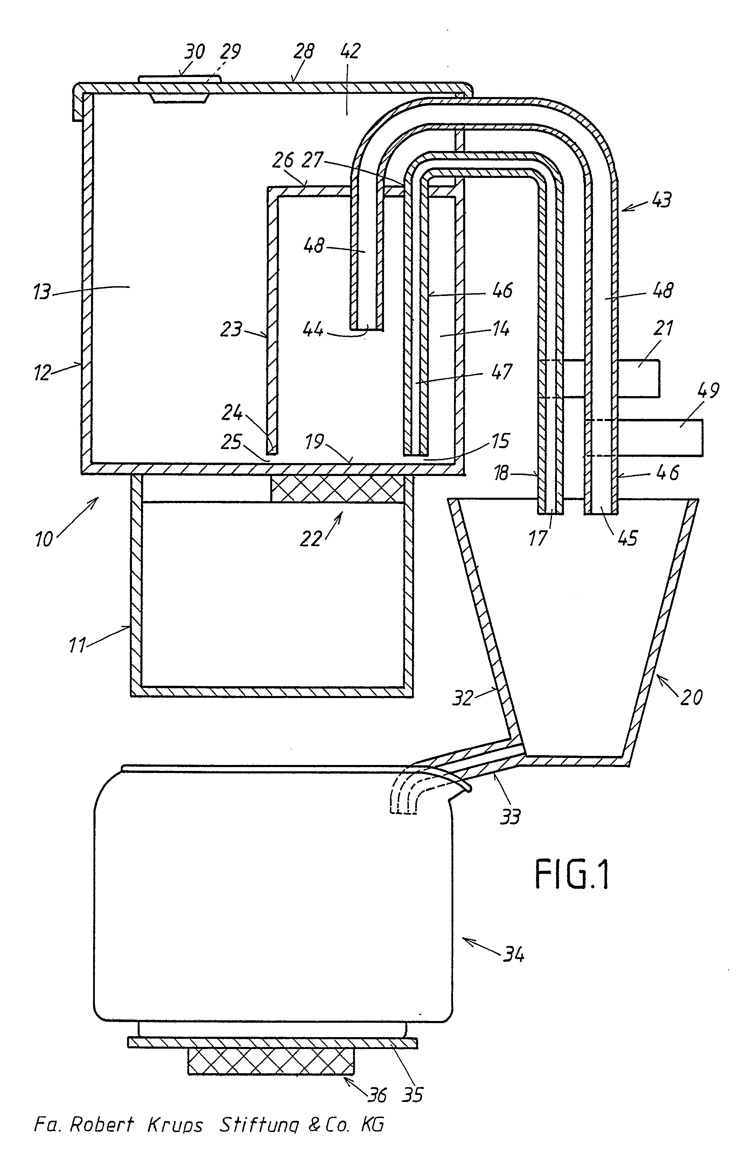

Das dem Ausführungsbeispiel nach der Fig. 1 zugrunde gelegte, elektrisch betriebene Gerät zum Zubereiten heißer Getränke, wie Kaffee, Tee od.dgl. ist mit 1o bezeichnet und wird nachfolgend kurz Kaffeeautomat 10 genannt. Der Kaffeeautomat 10 hat in seinem unteren Bereich liegend ein Gehäuse 11, das aus einem elektrisch isolierenden Werkstoff hergestellt ist und in seinem Inneren die bekannten Schalt-, Steuer- und Heizeinrichtungen aufnimmt. In dieses Gehäuse 11 kann auch das elektrische Zuführungskabel eingeführt werden. Von den grundsätzlich bekannten, im Inneren des Gehäuses 11 angeordneten Heizeinrichtungen ist in der Fig. 1 lediglich die Heizeinrichtung 22 dargestellt. Diese liegt in unmittelbarer Nähe des Bodens 19 eines generell mit 12 bezeichneten Frischwasserbehälters. Es können als Heizeinrichtung bekannte Ausführungsformen eingesetzt werden. Es ist lediglich darauf zu achten, daß ein guter Wärmeübergang vorhanden ist. Die Größe der benutzten Heizeinrichtung ist von der Füllmenge des Frischwasserbehälters 12 abhängig bzw. davon, wie viel Tassen Kaffee maximal mit dem Kaffeeautomaten 10 hergestellt werden sollen.

Der Frischwasserbehälter 12 ist aus einem ge-schmacksneutralen Werkstoff hergestellt. Insbeson-dere ist bei seiner Fertigung auf die Verwendung von metallischen Werkstoffen, insbesondere von Aluminium, Kupfer od.dgl. verzichtet worden. Ferner liegt die Heizeinrichtung 22 an der Außenseite des Bodens 19 des Frischwasserbehälters an. Dies bedeutet, daß die Heizeinrichtung 22 nicht in einem direkten Kontakt mit dem Frischwasser kommt wie dies beispielsweise bei einer Tauchsiederheizung der Fall wäre.

Der Frischwasserbehälter 12 ist in zwei Kammern 13 und 14 unterteilt, die nach Art kommunizierender Gefäße miteinander in Verbindung stehen. Die eine mit 13 bezeichnete Kammer hat Verbindung mit der Atmosphäre, die zweite Kammer 14 ist dagegen als Dampfdruckkammer ausgebildet. Die Kammern 13 und 14 sind u.a. begrenzt durch eine Scheide- oder Trennwand 23, deren unteres Ende 24 mit Abstand vom Boden 19 des Frischwasserbehälters 12 angeordnet ist, so daß ein Durchlaß 25 in unmittelbarer Nähe des Bodens 19 entsteht. Auf diese Weise bilden die Kammern 13 und 14 ein kommunizierendes System. Der eine Teil der Scheidewand 23 verläuft senkrecht und parallel zu den Seitenwänden des Frischwasserbehälters 12. Die obere Abdeckung 26 der Dampfdruckkammer 14 steht dagegen senkrecht in bezug auf die seitlichen Begrenzungswandungen des Frischwasserbehälters 12 und auch zu der Scheide- oder Trennwand 13.

Nach oben hin ist im gewählten Ausführungsbeispiel der gesamte Frischwasserbehälter 12 durch einen Deckel 28 verschlossen. Auch nach Aufsetzen des Deckels 28 auf den Frischwasserbehälter 12 steht die Kammer 13 mit der Atmosphäre in Verbindung. Dies geschieht durch einen Zugang 29, der in Form eines Durchbruches im Deckel 28 vorgesehen ist. Wenn man den Zugang 29 verkleinert und trotzdem die atmosphärische Verbindung zur Kammer 13 bestehen lassen will, dann läßt sich in den Zugang 29 ein Stopfen 30 einsetzen, der eine meist mittig angeordnete durchlaufende Bohrung aufweist.

Zu dem Kaffeeautomaten 10 gehören im dargestellten Ausführungsbeispiel zwei Saugheber, die unterschiedliche Länge haben und auch unterschiedliche längs durchlaufende Bohrungen. Da ist zunächst der Saugheber 16, der mit seinem einen Ende in die Dampfdruckkammer 14 eintaucht. Um dieses zu ermöglichen, ist in der Abdeckung 26 eine Durchtrittsöffnung 27 vorgesehen. Eine weitere, nicht näher bezeichnete Durchbrechung befindet sich in der benachbarten Seitenwand des Frischwasserbehälters 12. Die Eintrittsöffnung des Saughebers 16 ist mit 15 bezeichnet und liegt in unmittelbarer Nähe des Bodens 19, zweckmäßig in einer dort vorgesehenen, in der Fig. 1 nicht dargestellten Vertiefung.

Das gegenüberliegende andere, außerhalb des Frischwasserbehälters 12 liegende Ende des Saughebers 16 ist mit 18 bezeichnet, die Austrittsöffnung mit 17. Diese Austrittsöffnung liegt - wie die Fig. 1 erkennen läßt - unterhalb des Bodens 19 des Frischwasserbehälters 12. An dem Ende 18 des Saughebers 16 ist mit bekannten Verbindungsmitteln ein generell mit 21 bezeichneter Thermoschalter angebracht. Dieser Thermoschalter hat eine bekannte Ausbildung. Zweckmäßig ist es ein handelsübliches Produkt. Ein derartiger Thermoschalter hat in seinem Inneren mindestens einen Bimetallstreifen oder eine Bimetallscheibe, die unter dem Einfluß von Wärme ihre Lage verändert. Diese Lageveränderung wird zum Schalten eines Stromkreises ausgenutzt. Im konkreten Falle wird dann, wenn beim Betrieb des Saughebers 16 kochendes Wasser durch seine durchgehende Bohrung 27 hindurchläuft, ein Aufheizen der Begrenzungswände erfolgen und damit auch eine Wärmebeeinflussung des Thermoschalters 21. Hierdurch wird das Bimetallelement in seinem Inneren in seine andere Endlage überführt und damit die Leistung der Heizeinrichtung beeinflußt, beispielsweise reduziert. Im Grenzfall kann die Heizeinrichtung 22 auch vollständig ausgeschaltet werden, wenn der Thermoschalter 21 anspricht.

Beim Ausführungsbeispiel des Kaffeeautomaten nach der Fig. 1 der Zeichnung hat dieser neben dem Saugheber 16 noch einen zweiten Saugheber 43, der jedoch in seinen Abmessungen von dem bisher geschilderten abweicht. Gemeinsam ist, daß auch das eine Ende des Saughebers 43 in die Dampfdruckkammer 14 eintaucht. Jedoch ist der Abstand der jetzt mit 44 bezeichneten Eintrittsöffnung des Saughebers 43 von dem Boden 19 des Frischwasserbehälters 12 ein anderer, er ist nämlich wesentlich größer. Darüber hinaus hat die mit 48 bezeichnete durchgehende Bohrung des Saughebers 43 einen größeren Querschnitt. Das Austrittsende 45 des äußeren Endes 46 des Saughebers 43 liegt in gleicher Höhe wie beim Saugheber 16. Dies bedeutet, daß auch die Austrittsöffnung 45 des Saughebers 43 unterhalb des Bodens 19 des Frischwasserbehälters liegt. Dem Saugheber 43 ist ebenfalls ein jetzt mit 49 bezeichnetes Thermoschalter zugeordnet welches die gleiche Funktion wie der Thermoschalter 21 hat. Jedoch kann es unter Umständen zweckmäßig sein, die beiden Thermoschalter 21 und 49 auf unterschiedliche Temperaturen ansprechen zu lassen.

Wenn mit dem Kaffeeautomaten 1o nach der Ausführungsform gemäß der Fig. 1 der Zeichnung eine größere Menge von Kaffee hergestellt werden soll, dann tauchen beide Einführöffnungen 15 bzw. 44 der Saugheber 16 bzw. 43 in das Wasser ein. Dies bedeutet, daß - nachdem die erforderlichen Bedingungen in bekannter Weise im Kaffeeautomaten hergestellt sind - zunächst beide Saugheber 16 bzw. 43 kochendes Wasser fördern. Durch diese Überführung von Wasser aus der Dampfdruckkammer 14 in den Filter 20 sinkt der Wasserspiegel in der Dampfdruck kammer 14, bis schließlich die Eintrittsöffnung 44 oberhalb des Wasserspiegels zu liegen kommt. Ist dies geschehen, dann hört die Förderung von Wasser über den Saugheber 43 auf. Der Wassertransport wird nunmehr ausschließlich durch den Saugheber 16 weitergeführt und zwar so lange, bis das gesamte Wasser aus dem Frischwasserbehälter 12 in den Filter überführt wird. Das Überführen geschieht dabei kontinuierlich und nicht schwallweise. Eine solche Anordnung hat den großen Vorteil, daß zu Beginn des Brühvorganges - wie beim Handaufguß - sehr viel kochendes Wasser in den Filter 20 befördert wird.

Soll dagegen mit dem Kaffeeautomaten 10 nach der Fig. 1 der Zeichnung nur eine geringe Menge von Kaffee hergestellt werden, beispielsweise lediglich zwei Tassen, dann kommt der Saugheber 43 schon deswegen nicht zum Einsatz, weil einerseits die intrittsöffnung 44 nicht in das Wasser eintaucht und zum anderen durch eine grundsätzlich bekannte Sperreinrichtung verschlossen wird. In diesem Falle arbeitet nur der Saugheber 16. Da dessen durchlaufende Bohrung 47 im Querschnitt relativ klein gehalten ist, erfolgt auch ein langsameres Überführen des Wassers.

Nachzutragen bleibt noch, daß der Filter 20 eine grundsätzlich bekannte Ausbildung hat und aus einem geschmacksneutralen Kunststoff gefertigt ist. Dies gilt auch für die Fertigung der beiden Saugheber 16 und 43. Der Boden des kegelstumpfförmig gehaltenen Filters 20 ist mit 31 bezeichnet, die schräggestellten Seitenwandungen mit 32. In den Filter 20 wird eine nicht näher bezeichnete Filtertüte eingelegt, in die das Kaffeemehl eingebracht wird. Der fertige Kaffee verläßt den Filter 20 durch einen Auslaß 33, dessen vorderes, mit einer Auslaßöffnung versehene Ende in einen Auffangbehälter 34 einmündet, der im gewählten Ausführungsbeispiel als Glaskrug ausgebildet ist. Dieser Auffangbehälter 34 steht auf einer plattenförmigen Aufstellfläche 35, unter der eine grundsätzlich bekannte Warmhalteheizung 36 angeordnet ist. Die Leistung dieser Warmhalteheizung 36 kann im Vergleich mit der Heizeinrichtung 22 wesentlich geringer gehalten werden, weil es nur erforderlich ist, den im Auffangbehälter 34 befindlichen Kaffee auf einer bestimmten Temperatur zu halten.

Nachzutragen bleibt noch, daß der Deckel 28 einen umlaufenden, abgewinkelten Rand 41 aufweist, der den Frischwasserbehälter von außen her umgreift. Im dargestellten Ausführungsbeispiel nach der Fig. 1 der Zeichnung setzt sich die Kammer 13 des Frischwasserbehälters aus einem aufrechten Teilbereich und einem waagerechten Teilbereich zusammen, wobei letzterer mit 42 bezeichnet ist. Der waagerechte Bereich 42 der Kammer 13 wird nach unten begrenzt durch die obere Abdeckung 26 der Dampfdruckkammer 14.

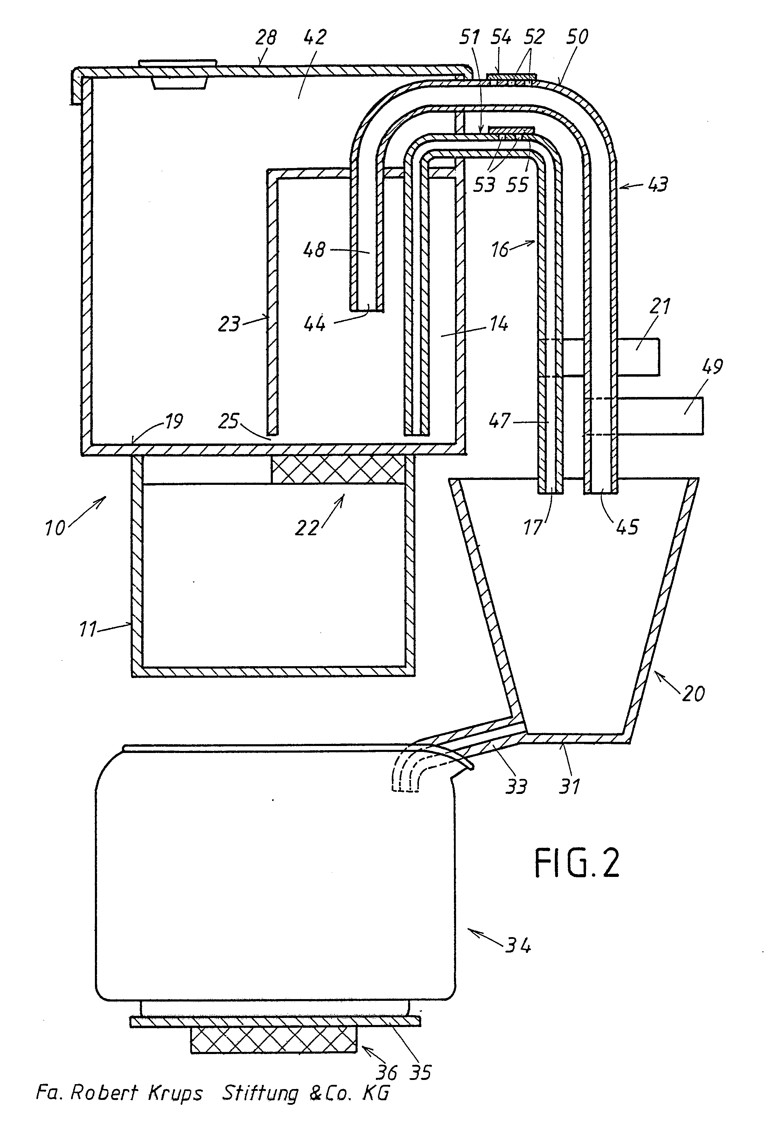

Die Ausführungsform des Kaffeeautomaten 10 gemäß der Fig. 2 der Zeichnung unterscheidet sich von derjenigen nach der Fig. 1 lediglich durch einige Änderungen im Bereich der Saugheber 16 und 43. Die übrigen Teile des Kaffeeautomaten 10 sind unverändert geblieben, so daß auf die vorangegangenen Ausführungen Bezug genommen werden kann.

Im höchsten Punkt des Saughebers 43, im sogenannten Scheitel, sind mehrere Durchbrüche 52 vorgesehen, die in der dargestellten Lage sämtlich durch einen Sperrschieber 54 verschlossen sind. Auch in dem mit 51 bezeichneten Scheitel des Saughebers 16 sind mehrere Durchbrüche 53 angeordnet, die in der wiedergegebenen Lage ebenfalls durch den jetzt mit 55 gekennzeichneten Sperrschieber verschlossen sind. In der in der Fig. 2 dargestellten Lage unterscheidet sich die Arbeitsweise des Kaffeeautomaten 10 nicht von derjenigen nach der Fig. 1 der Zeichnung, weil durch die in ihrer Schließlage befindlichen Sperrschieber 53 bzw. 54 die Saugheber 16 und 43 eine geschlossene Mantelfläche haben.

Erfindungsgemäß kann man jedoch die Durchbrüche 52 und 53 in den Saughebern 43 bzw. 16 von Hand aus öffnen und zwar durch Verschieben der Sperrschieber 54 bzw. 55 in ihre unwirksame Lage. Dieses Öffnen der Durchbrüche 52 bzw. 53 kann vom Benutzer wahlweise vorgenommen werden. Dadurch hat er es in der Hand, die Brühzeit und die Brühintensität zu steuern, denn durch Betätigen der Steuerschieber läßt sich die Wirkung des Saughebers 16 bzw. 43 aufheben. Um dabei die Sperrschieber 54 bzw. 55 in ihrer jeweiligen Endlage zu sichern, empfiehlt es sich, diese mit Rasten zu versehen, die mit Gegenrasten der Umfangsfläche der Saugheber 16 bzw. 43 zusammenwirken. Auf die zeichnerische Darstellung derartiger Lagesicherungselemente ist verzichtet, weil sie eine bekannte Ausbildung haben.

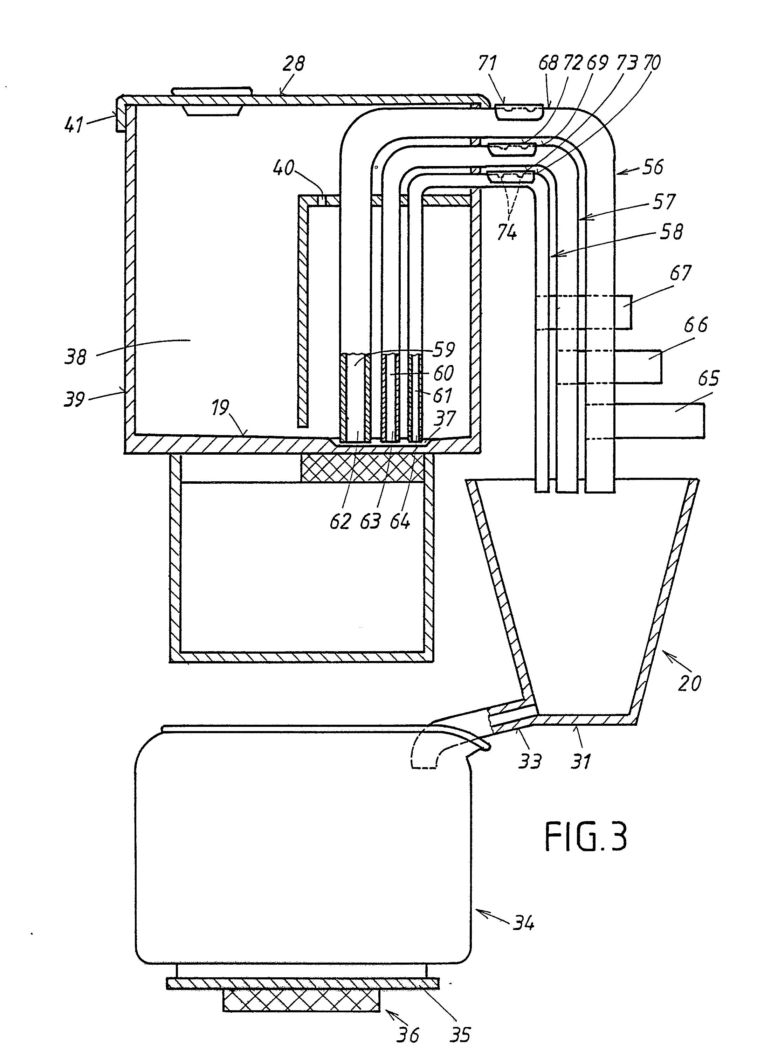

In der Fig. 3 der Zeichnung ist ein drittes Ausführungsbeispiel des erfindungsgemäßen Kaffeeautomaten 10 dargestellt. Sofern die Teile des Kaffeeautomaten l0 gegenüber den Ausführungsbeispielen nach den Fig. 1 und 2 unverändert sind, wurden die Bezugszeichen beibehalten. Abweichend bei dem dritten Ausführungsbeispiel ist die Anzahl der benutzten Saugheber. Es sind nunmehr drei Saugheber vorhanden. Darüber hinaus liegen die Einlaßöffnungen sämtlicher Saugheber auf gleicher Höhe und zwar in einem vertieften Bereich 37 des Bodens 19 des Frischwasserbehälters 12. Auch die Auslaßöffnungen liegen alle auf gleichem Höhenniveau, wobei dieses unterhalb des Bodens 19 des Frischwasserbehälters liegt wie die Fig. 3 deutlich erkennen läßt. Die Saugheber sind jetzt mit 56 bzw. 57 bzw. 58 gekennzeichnet. Dabei hat der Saugheber 56 die durchlaufende Bohrung 59 mit der größten Querschnittsfläche; der Saugheber 57 eine durchlaufende Bohrung 6o mit einer kleineren Querschnittsfläche und der Saugheber 58 die durchlaufende Bohrung 61 mit der kleinsten Querschnittsfläche. In Draufsicht gesehen hat jeder Saugheber 56, 57 bzw. 58 die Gestalt eines U's, wobei jedoch der eine, in der Zeichnung rechte Schenkel etwas länger gehalten ist als der andere. Die Eintrittsöffnungen der Saugheber 56 bzw. 57 bzw. 58 sind mit 62 bzw. 63 bzw. 64 bezeichnet, wobei diese drei Eintrittsöffnungen jeweils in dem vertieften Bereich 37 im Boden 19 des Frischwasserbehälters 12 liegen.

An der Außenseite jedes U's des Saughebers, also im Scheitel 68 bzw. 69 bzw. 70 sind Durchbrüche 74 angebracht. Pro Saugheber ist dabei im Scheitel mindestens ein Durchbruch vorgesehen. Es können aber auch anzahlmäßig mehr Durchbrüche vorhanden sein. Die Durchbrüche jedes Scheitels 68, 69 bzw. 70 werden durch einen Sperrschieber 71 bzw. 72 bzw. 73 abgedeckt. Diese Sperrschieber 71 bis 73 befinden sich gemäß der Stellung nach der Fig. 3 der Zeichnung in ihrer Schließlage. Dies bedeutet, daß die Außenfläche der Saugheber 56 bzw. 57 bzw. 58 geschlossen ist. Bei dieser Anordnung würden also beim bestimmungsgemäßen Gebrauch des Kaffeeautomaten 1o alle drei Saugheber fördern. Dies würde ein außerordentlich schnelles Entleeren des Frischwasserbehälters bedeuten. Auf der anderen Seite hat es der Benutzer in der Hand, durch Veränderung der Lage der Sperrschieber 71 bis 73 die Brühzeit und die Brühintensität zu verändern. Dies geschieht einfach dadurch, daß er einen oder mehrere der Sperrschieber 71 bis 73 in seine Offenlage bringt. Auf die zeichnerische Wiedergabe der Öffnungslage der Sperrschieber 71 bis 73 ist der Einfachheit halber verzichtet.

Erfindungsgemäß ist jedem der Saugheber 56 bzw. 57 bzw. 58 ein Thermoschalter zugeordnet, die mit 65 bzw. 66 bzw. 67 bezeichnet sind. Hinsichtlich der Ausbildung dieser Thermoschalter gilt das Gesagte. Es sei lediglich erwähnt, daß man wahlweise die Möglichkeit hat, die Thermoschalter 65 bis 67 gleiche Eigenschaften aufweisen zu lassen. Daneben hat man aber auch die Möglichkeit, sie unterschiedlich zu gestalten, beispielsweise dann, wenn man die Steuerung beim Erreichen unterschiedlicher Temperaturen einsetzen lassen will.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere hinsichtlich der Gestalt und Anordnung der Saugheber. Insbesondere läßt sich die Anzahl der zum Überführen des kochenden Wassers aus dem Frischwasserbehälter benötigten Saugheber verändern. Dies gilt auch für die Querschnittsdimensionen der Bohrungen der jeweils benutzten Saugheber. Ferner läßt sich bei der Ausführungsform nach der Fig. 2 der Zeichnung der Abstand der Eintrittsöffnung 44 des Saughebers 43 vom Boden 19 variieren.

In den Figuren der Zeichnungen ist vorgesehen, ein und demselben Saugheber jeweils nur einen einzigen Thermoschalter zuzuordnen. Bei Bedarf ist es ohne weiteres möglich, dem jeweils außen liegenden Ende eines Saughebers auch mehrere Thermoschalter zuzuordnen, die unterschiedliche Eigenschaften haben können. Und schließlich ist es möglich, die Erfindung auch bei anderen als den dargestellten Kaffeeautomaten 10 einzusetzen.

Die Durchbrechung 40 in der oberen Abdeckung 26 ist im gewählten Ausführungsbeispiel nach der Fig. 3 der Zeichnung verhältnismäßig klein bemessen, so daß beim Einfüllen des Frischwassers die Luft nur verhältnismäßig langsam aus der Dampfdruckkammer 14 entweichen kann. In Abwandlung des dargestellten Ausführungsbeispieles kann man auch eine wesentlich größere Durchbrechung wählen und diese durch einen herausziehbaren Stopfen verschließen. Wenn bei dieser Ausführungsform das Wasser in den Frischwasserbehälter eingegossen wird, kann man den Stopfen aus der Durchbrechung 40 herausziehen, so daß es dann zu einer sehr schnellen Entlüftung der Dampfdruckkammer bzw. zum schnellen Entweichen der Luft aus der Dampfdruckkammer kommt. Nach Beendigung des Eingießens des Frischwassers läßt sich dann die Durchbrechung durch Einsetzen des Stopfens wieder verschließen.

Bezugszeichenliste :

10 - Kaffeeautomat
11 - Gehäuse
12 - Frischwasserbehälter
13 - Kammer (von 12)
14 - Kammer (von 12) - Dampfdruckkammer
15 - Eintrittsöffnung (von 16)
16 - 1. Saugheber
17 - Austrittsöffnung (von 16)
18 - Ende (von 16)
19 - Boden (von 12)
20 - Filter
21 - Thermoschalter (von 16)
22 - Heizeinrichtung
23 - Scheide- oder Trennwand (zwischen 13 und 14)
24 - unteres Ende (von 23)
25 - Durchlaß
26 - obere Abdeckung (von 14)
27 - Durchtrittsöffnung (in 26)
28 - Deckel (von 12)
29 - Zugang zur Atmosphäre (in 28)
30 - Stopfen (für 29)
31 - Boden (von 20)
32 - Seitenwand (von 20)

33 - Auslaß (von 20)
34 - Auffang-behälter
35 - Aufstellfläche
36 - Warmhalteheizung
37 - vertiefter Bereich (in 29, Fig. 3)
38 - senkrechter Teil (von 13)
39 - Seitenwand
40 - Durchbrechung (in 26)
41 - abgewinkelter Rand (von 28)
42 - waagerechter Bereich (von 13)
43 - 2. Saugheber
44 - Eintrittsöffnung (von 43)
45 - Austrittsöffnung (von 43)
46 - Ende (von 43)
47 - durchgehende Bohrung (von 16)
48 - durchgehende Bohrung (von 43)
49 - Thermoschalter (von 43)
50 - Scheitel (höchster Bereich von 43)
51 - Scheitel (höchster Bereich von 16)
52 - Durchbruch (in 50)
53 - Durchbruch (in 51)
54 - Sperrschieber (für 52)
55 - Sperrschieber (für 53)
56 - Saugheber )
57 - Saugheber ) Fig. 3
58 - Saugheber )
59 - Bohrung (von 56) )
60 - Bohrung (von 57) ) Fig. 3
61 - Bohrung (von 58) )
62 - Eintrittsöffnung (von 56) )
63 - Eintrittsöffnung (von 57) ) Fig. 3
64 - Eintrittsöffnung (von 58) )
65 - Thermoschalter (für 56) )
66 - Thermoschalter (für 57) ) Fig. 3
67 - Thermoschalter (für 58) )
68 - Scheitel (von 56) )
69 - Scheitel (von 57) ) Fig. 3
70 - Scheitel (von 58) )
71 - Sperrschieber (von 56) )
72 - Sperrschieber (von 57) ) Fig. 3
73 - Sperrschieber (von 58) )
74 - Durchbruch (in 68, 69, 70) (Fig. 3)

## Ansprüche

1. Elektrisch betriebenes Gerät zum Zubereiten heißer Getränke, wie Kaffee, Tee od.dgl. mit einem Gehäuse zur Unterbringung von Schalt-, Steuer- und Heizeinrichtungen, einem Frischwasserbehälter, Fördereinrichtungen zum Weiterleiten des erhitzten Wassers zu einem das zu überbrühende Gut, wie Kaffeemehl od.dgl. aufnehmenden Filter und einem vorzugsweise eine Warmhalteeinrichtung aufweisenden Auffangbehälter für das aus dem Filter auslaufende fertige Getränk, wie Kaffee od.dgl.,

gekennzeichnet durch die folgenden Merkmale :
der aus einem geschmacksneutralen Werkstoff gefertigte Frischwasserbehälter (12) ist in wenigstens zwei Kammern (13, 14) unterteilt, die nach Art kommunizierender Gefäße miteinander in Verbindung stehen, die eine (13) der beiden Kammern (13, 14) steht mit der Atmosphäre in Verbindung;
die zweite Kammer ist als Dampfdruckkammer (14) ausgebildet;
in die Dampfdruckkammer (14) tauchen die jeweils eine Eintrittsöffnung (15; 44) aufweisenden einen Enden mehrerer Saugheber (16; 43) ein;
die die Durchtrittsmenge des erhitzten Wassers bestimmenden Querschnitte der durchgehenden Bohrungen (47, 48) der Saugheber (16; 43) sind unterschiedlich dimensioniert;
die Austrittsöffnungen (17; 45) der anderen Enden (18; 46) der Saugheber (16; 43) liegen unterhalb des Bodens (19) der Dampfdruckkammer (14) und über dem Filter (20) für das Kaffeemehl;
an wenigstens einem der über dem Filter (20) liegenden Enden (18; 46) der Saugheber (16; 43) ist ein Thermoschalter (21) angebracht, der die Leistung der Heizeinrichtung (22) des Gerätes (1o) steuert.

2. Gerät nach Anspruch 1, dadurch gekennzeichnet, daß die Eintrittsöffnungen (15 bzw. 44) der Saugheber (16 bzw. 43) unterschiedlich weit von dem Boden (19) der Dampfdruckkammer (14) entfernt sind, derart, daß die Eintrittsöffnung (44) des Saughebers (43) mit der im Querschnitt größeren Bohrung (48) den größeren Abstand vom Boden (19) aufweist (Fig. 1 und 2).

3. Gerät nach Anspruch 1 und 2, dadurch gekennzeichnet, daß an jedem Ende (18 bzw. 46) eines Saughebers (16 bzw. 43) ein Thermoschalter (21 bzw. 49) zur Steuerung der Leistung der Heizeinrichtung (22) angebracht ist.

4. Gerät nach den Ansprüchen 1 bis 3, gekennzeichnet durch die Verwendung eines Thermoschalters (21 bzw. 49) mit Bimetallstreifen oder -scheibe, der beispielsweise unter der Handelsbezeichnung "miniclick" erhältlich ist.

5. Gerät nach Anspruch 1, gekennzeichnet durch die Verwendung mehrerer Saugheber (56; 57; 58), deren Bohrungen (59, 60, 61) unterschiedliche Querschnittsgröße aufweisen, deren Eintrittsöffnungen in gleicher Höhe im Bezug auf den Boden (19) der Dampfdruckkammer (14) angeordnet sind und die in ihrem Scheitel (68, 69, 70) jeweils mindestens einen Durchbruch (74) aufweisen der jeweils unter Verwendung eines Steuerelementes (71, 72, 73) wahlweise in seine Offen- oder Schließlage überführbar ist.

6. Gerät nach Anspruch 5, dadurch gekennzeichnet, daß im Scheitel (68, 69, 70) jedes Saughebers (56, 57, 58) mehrere Durchbrüche (74) angeordnet sind und daß jedes Steuerelement als Sperrschieber (71, 72, 73) ausgebildet ist, der jeweils entlang der Scheitelaußenfläche in eine Offen-oder Schließlage verschiebbar ist.

7. Gerät nach Anspruch 5 und 6, dadurch gekennzeichnet, daß die Sperrschieber (71, 72, 73) in ihren Endlagen durch Rasten und Gegenrasten lagegesichert sind.

8.- Gerät nach den Ansprüchen 1, 5, 6 und 7, dadurch gekennzeichnet, daß die Eintrittsöffnungen (62, 63, 64) der Saugheber (56, 57, 58) in einem vertieften Bereich (37) des Bodens (19) der Dampfdruckkammer (14) liegen (Fig. 3).

FIG.1

Fa. Robert Krups Stiftung & Co. KG

FIG.2

Fa. Robert Krups Stiftung &Co. KG

FIG.3

Fa. Robert Krups Stiftung & Co. KG

**Europäisches Patentamt**

# EUROPÄISCHER RECHERCHENBERICHT

Nummer der Anmeldung

EP    89 10 7900

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | EP-A-1453 (WURTTEMBERGISCHE METALLWARENFABRIK) <br> * Seite 6, Zeile 1 - Seite 8, Zeile 15; Figur 1 * | 1 | A47J31/30 <br> A47J31/057 |
| A | FR-A-773046 (RANQUE ET AL) <br> * das ganze Dokument * | 1 | |
| A | DE-A-2951866 (BOSCH-SIEMENS HAUSGERÄTE) <br> * Seite 10, Zeile 5 - Seite 11, Zeile 19; Figur 1 * | 1 | |
| A | US-A-3463075 (WICKENBERG) <br> * Spalte 2, Zeile 19 - Zeile 34; Figuren 1, 2 * | 3, 4 | |
| A | GB-A-793944 (STIEBEL) <br> * das ganze Dokument * | 5-7 | |
| A | DE-A-3312354 (ROBERT KRUPS STIFTUNG) <br> * Figur 1 * | 8 | |

RECHERCHIERTE SACHGEBIETE (Int. Cl.4 )

A47J

Der vorliegende Recherchenbericht wurde für alle Patentansprüche erstellt

| Recherchenort | Abschlußdatum der Recherche | Prüfer |
|---|---|---|
| DEN HAAG | 27 JULI 1989 | MEINDERS H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................
& : Mitglied der gleichen Patentfamilie, übereinstimmendes Dokument

EPO FORM 1503 03.82 (P0403)